(19) Europäisches Patentamt
European Patent Office
Office européen des brevets

(11) Veröffentlichungsnummer: **0 050 359**
**B1**

(12) **EUROPÄISCHE PATENTSCHRIFT**

(45) Veröffentlichungstag der Patentschrift: **10.04.85**

(51) Int. Cl.[4]: **C 08 L 83/04**, C 08 L 83/12, C 09 D 3/82

(21) Anmeldenummer: **81108533.1**

(22) Anmeldetag: **20.10.81**

(54) **Verfahren zur Herstellung von Überzügen.**

(30) Priorität: **21.10.80 DE 3039721**

(43) Veröffentlichungstag der Anmeldung: **28.04.82 Patentblatt 82/17**

(45) Bekanntmachung des Hinweises auf die Patenterteilung: **10.04.85 Patentblatt 85/15**

(84) Benannte Vertragsstaaten: **DE FR GB**

(56) Entgegenhaltungen:
**DE - A - 1 519 411**
**GB - A - 2 016 494**

**PATENTS ABSTRACTS OF JAPAN, Band 2, nr. 76, 16. Juni 1978, Seite 991C78**

(73) Patentinhaber: **WACKER-CHEMIE GMBH, Prinzregentenstrasse 22, D-8000 München 22 (DE)**

(72) Erfinder: **Preiner, Gerhard, Dr. Dipl.-Chem., Mehringer Strasse 56, D-8263 Burghausen (DE)**
Erfinder: **Müller, Johann, Regerstrasse 12, D-8263 Burghausen (DE)**
Erfinder: **Wegehaupt, Karl-Heinrich, Dr. Dipl.-Chem., Marktler Strasse 78, D-8263 Burghausen (DE)**

**EP 0 050 359 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Verfahren zur Herstellung von Überzügen durch Auftragen von in wässrigem Medium befindlichem Organopolysiloxan auf die zu überziehende Unterlage und Vernetzen vom Organopolysiloxan durch Anlagerung von Si-gebundenen Wasserstoffatomen an SiC-gebundene Gruppen mit aliphatischer Mehrfachbindung sind bereits bekannt. Bei diesen bekannten Verfahren wurde Organopolysiloxan in wässriger Emulsion eingesetzt. Hierzu wird z.B. auf GB-PS 1 541 801, veröffentlicht 7. März 1979, Wacker-Chemie GmbH, verwiesen. Gegenüber diesen bekannten Verfahren hat das erfindungsgemässe Verfahren z.B. die Vorteile, dass es die Schwierigkeiten der Herstellung von und des Umgangs mit Emulsionen vermeidet und dass die dabei erhaltenen Überzüge hydrophiler sind.

Gegenstand der Erfindung ist ein Verfahren zur Herstellung von Überzügen durch Auftragen von in wässrigem Medium befindlichem Organopolysiloxan auf die zu überziehende Unterlage und Vernetzen vom Organopolysiloxan durch Anlagerung von Si-gebundenen Wasserstoffatomen an SiC-gebundene Gruppen mit aliphatischer Mehrfachbindung, dadurch gekennzeichnet, dass als in wässrigem Medium befindliches Organopolysiloxan mit Si-gebundenem Wasserstoff und SiC-gebundenen Gruppen mit aliphatischer Mehrfachbindung solches verwendet wird, das durch einen Gehalt von mindestens einer daran gebundenen Oxyalkyleneinheit je Si-Atom wasserlöslich ist.

Bei den zu überziehenden Unterlagen kann es sich um beliebige Unterlagen handeln, bei denen es erwünscht ist, sie hydrophil oder z.B. leichter anstreichbar für wässrige Dispersionsfarben zu machen. Beispiele für solche Unterlagen sind manche Papiersorten, gewebte oder ungewebte Fasern aus hydrophoben Kunststoffen, wie Polyamid oder Polyester, sowie Dichtungen oder Überzüge aus Organopolysiloxanelastomeren.

Das Auftragen der erfindungsgemäss verwendeten wässrigen Lösungen auf die zu überziehenden Unterlagen kann in beliebiger, für die Herstellung von Überzügen aus Flüssigkeiten geeigneter und vielfach bekannter Weise erfolgen, beispielsweise durch Tauchen, Streichen, Klotzen, Giessen, Sprühen, Aufwalzen, Drucken, Messer- oder Rakelbeschichtung, einschliesslich derjenigen mit einem Meyer-Stab (englisch: Meyer-rod) oder mittels einer Luftbürste.

Das Vernetzen vom Organopolysiloxan durch Anlagerung von Si-gebundenen Wasserstoffatomen an SiC-gebundene Gruppen mit aliphatischer Mehrfachbindung kann durch beliebige, wasserlösliche Katalysatoren für eine derartige Anlagerung gefördert werden. Bekannte Beispiele für solche Katalysatoren sind $H_2PtCl_6 \cdot 6H_2O$, $PtCl_4$ und Zeise'sches Salz, $KPtCl_3C_2H_4$. Enthalten die erfindungsgemäss verwendeten wässrigen Lösungen solche Platinkatalysatoren, so vorzugsweise in Mengen von 20 bis 350 Gewichts-ppm, insbesondere 50 bis 100 Gewichts-ppm, Platin, jeweils bezogen auf das Gesamtgewicht von eingesetztem Organopolysiloxan.

Um ein vorzeitiges Gelieren zu verhindern, können die erfindungsgemäss eingesetzten wässrigen Lösungen mindestens einen wasserlöslichen Inhibitor, wie Propargylalkohol oder Pyridin, enthalten.

Wenn als in wässrigem Medium befindliches Organopolysiloxan solches verwendet wird, bei dem sich die SiC-gebundenen Gruppen mit aliphatischer Mehrfachbindung zumindest teilweise in einer anderen Art von Molekülen befinden als der Si-gebundene Wasserstoff und die Überzüge elastomer sein sollen, so ist als Organopolysiloxan mit SiC-gebundenen Gruppen mit aliphatischer Mehrfachbindung solches der Formel

$$R^2_aR_{3-a}Si(OSiRR^1)_n(OSiR_2)_pOSiR_{3-b}R^2_b \quad . \qquad (I)$$

und als Organopolysiloxan mit Si-gebundenem Wasserstoff solches der Formel

$$R^6_aR^5_{3-a}Si(OSiR^5R^1)_{n'}(OSiR^5_2)_{p'}(OSiR^5H)_xOSiR_{3-b}R^6_b \qquad (II)$$

bevorzugt.

In diesen Formeln bedeutet

R gleiche oder verschiedene einwertige Kohlenwasserstoffreste,

$R^1$ gleiche oder verschiedene Reste der Formel

$$-R^3(OCHR^4CH_2)_mQY,$$

wobei $R^3$ gleiche oder verschiedene, von aliphatischer Mehrfachbindung freie, zweiwertige Kohlenwasserstoffreste jeweils mit 1 bis 4 Kohlenstoffatomen, $R^4$ Wasserstoff oder gleiche oder verschiedene, von aliphatischer Mehrfachbindung freie, zweiwertige Kohlenwasserstoffreste mit jeweils 1 bis 4 Kohlenstoffatomen, Y Wasserstoff oder gleiche oder verschiedene, von aliphatischer Mehrfachbindung freie Acylreste mit jeweils 1 bis 3 Kohlenstoffatomen je Rest bedeutet oder die gleiche Bedeutung wie $R^4$ hat und m eine Zahl von 2 bis 30 ist,

$R^2$ Hydroxylgruppen und/oder gleiche oder verschiedene Alkoxygruppen und/oder es hat die gleiche Bedeutung wie R oder $R^1$, mit der Massgabe, dass im Organopolysiloxan der Formel (I) an ein Si-Atom jeweils höchstens ein Kohlenwasserstoffrest mit aliphatischer Mehrfachbindung gebunden ist und insgesamt mindestens 2 der Reste R und $R^2$ je Molekül Kohlenwasserstoffreste mit aliphatischer Mehrfachbindung sind,

$R^5$ gleiche oder verschiedene, von aliphatischer Mehrfachbindung freie, einwertige Kohlenwasserstoffreste,

$R^6$ Wasserstoff, Alkoxy- und/oder Hydroxylgruppen und/oder es hat die gleiche Bedeutung wie $R^5$,

a 0 oder 1,
b 0 oder 1,
n ist mindestens 1

n' mindestens 1
x mindestens 2
p 0 bis m·n–n und
p' 0 bis m·n'–n'–x.

Vorzugsweise hat wegen der leichteren Zugänglichkeit $R^2$ die gleiche Bedeutung wie R oder ist eine Alkoxy- oder Hydroxylgruppe. Dann gilt:

p = 0 bis m·n –n–2.

Vorzugsweise hat ebenfalls wegen der leichteren Zugänglichkeit $R^6$ die gleiche Bedeutung wie $R^5$ oder es ist Wasserstoff oder eine Hydroxylgruppe. Dann gilt:

p' = 0 bis m·n' –n'–x–2.

Wenn im Organopolysiloxan der Formel (I) insgesamt nur 2 der Reste R und $R^2$ Kohlenwasserstoffreste mit aliphatischer Mehrfachbindung sind, muss x mindestens 3 sein.

Wenn x nur 2 ist, müssen im Organopolysiloxan der Formel (I) insgesamt mindestens 3 der Reste R und $R^2$ Kohlenwasserstoffreste mit aliphatischer Mehrfachbindung sein.

Beispiele für von aliphatischer Mehrfachbindung freie Kohlenwasserstoffreste R und $R^2$ sind Alkylreste mit 1 bis 8 Kohlenstoffatomen, wie der Methyl-, Ethyl-, n-Propyl-, Isopropylrest sowie Butyl- und Octylreste; Cycloalkylreste, wie der Cyclohexylrest; Arylreste, wie der Phenylrest; Alkarylreste, wie Tolylreste; und Aralkylreste, wie der Benzylrest. Wegen der leichteren Zugänglichkeit sind jedoch vorzugsweise mindestens 80% der Anzahl der von aliphatischer Mehrfachbindung freien Kohlenwasserstoffreste R und $R^2$ Methylreste.

Bevorzugt als Kohlenwasserstoffreste R und $R^2$ mit aliphatischer Mehrfachbindung ist der Vinylrest. Weitere Beispiele für Kohlenwasserstoffreste R und $R^2$ mit aliphatischer Mehrfachbindung sind der Allyl- und Methallylrest.

Vorzugsweise beträgt die gesamte Anzahl der Kohlenwasserstoffreste R und $R^2$ mit aliphatischer Mehrfachbindung je Molekül im Organopolysiloxan der Formel (I) höchstens

1/10 (n+p+2),

um möglichst elastische Überzüge zu erzielen.

Als Rest $R^3$ ist der $-(CH_2)_3$-Rest bevorzugt.

Bei den Alkylresten $R^4$ kann es sich um den Methyl-, Ethyl-, n-Propyl-, Isopropyl-, n-Butyl-, sec.-Butyl- oder tert.-Butylrest handeln. Bevorzugt als $R^4$ ist jedoch Wasserstoff.

Sind verschiedene $R^4$ vorhanden, so können die Oxyalkylenreste als Blöcke angeordnet oder statistisch verteilt sein.

Die Beispiele für Alkylreste $R^4$ gelten im vollen Umfang auch für Alkylreste Y. Das wichtigste Beispiel für einen Acylrest Y ist der Acetylrest.

Vorzugsweise ist m 6 bis 15.

Vorzugsweise liegt n im Bereich von 0,3 (n+p+2) bis 0,6·(n+p+2).

Vorzugsweise liegt auch p im Bereich von 0,3 (n+p+2) bis 0,6 (n+p+2).

Es kann eine Art von Organopolysiloxan der Formel (I) verwendet werden. Es kann aber auch ein Gemisch aus mindestens zwei verschiedenen Arten von Organopolysiloxan der Formel (I) verwendet werden.

Die Beispiele für von aliphatischer Mehrfachbindung freie Kohlenwasserstoffreste R und $R^2$ gelten im vollen Umfang auch für die Reste $R^5$ und für Kohlenwasserstoffreste $R^6$.

Vorzugsweise liegt n' im Bereich von 0,3 (n'+p'+x+2) bis 0,6 (n'+p'+x+2).

Vorzugsweise beträgt x höchstens 1/2 (n'+p'+x+2).

Es kann eine Art von Organopolysiloxan der Formel (II) verwendet werden. Es kann aber auch ein Gemisch aus mindestens zwei verschiedenen Arten von Organopolysiloxan der Formel (II) verwendet werden.

Die Viskosität vom Organopolysiloxan der Formel (I) und Formel (II) beträgt jeweils vorzugsweise 50 bis $10^6$ mPa·s bei 25°C.

Die Herstellung von Organopolysiloxanen der Formel (I) kann z.B. durch Mischhydrolyse von Silanen der Formel R $R^1$ $SiCl_2$ oder R $R^1$ Si $(OCH_3)_2$ oder R $R^1$ Si $(OC_2H_5)_2$ und Silanen der Formel $R_2SiCl_2$ oder $R_2Si(OCH_3)_2$ in den gewünschten Mengenverhältnissen erfolgen. Ebenso kann die Herstellung von Organopolysiloxanen der Formel (II), z.B. durch Mischhydrolyse von Silanen der Formel $RR^1SiCl_2$ oder $RR^1Si(OCH_3)_2$ oder $RR^1Si(OC_2H_5)_2$ und Silanen der Formel $SiRHCl_2$ oder $SiRH(OCH_3)_2$ oder $SiRH(OC_2H_5)_2$ in den gewünschten Mengenverhältnissen erfolgen. Durch Zugabe eines Elektrolyten, wie NaCl oder $Na_2SO_4$ könen die so erhaltenen Organopolysiloxane leicht als konzentrierte wässrige Lösung (etwa 50 Gew.%) abgeschieden und daraus durch Abdestillieren des Wassers isoliert werden, was aber keineswegs stets erforderlich ist.

Vorzugsweise werden Organopolysiloxan der Formel (I) und Organopolysiloxan der Formel (II) in solchen Mengen eingesetzt, dass das Verhältnis von Grammäquivalent aliphatischer Mehrfachbindung zu Grammatom Si-gebundenem Wasserstoff 3:1 bis 1:10, insbesondere 1:1 bis 1:5, beträgt.

Wenn als in wässrigem Medium befindliches Organopolysiloxan zumindestens zum Teil solches verwendet wird, das in jedem Molekül sowohl SiC-gebundene Gruppen mit aliphatischer Mehrfachbindung als auch Si-gebundenen Wasserstoff enthält, und die Überzüge elastomer sein sollen, so ist als Organopolysiloxan solches der Formel

$$R^7_aR_{3-a}Si(OSiRR^1)_{n''}(OSiR^5H)_x, (OSiR_2)_{p''}OSiR_{3-a}R^7_a \quad (III)$$

bevorzugt. In dieser Formel haben

R, $R^1$, $R^5$ und a jeweils die oben dafür angegebene Bedeutung,

$R^7$ hat die gleiche Bedeutung wie $R^2$ oder $R^6$,

$n''$ ist mindestens 1
$x'$ mindestens 1 und
$p''$ 0 bis $m \cdot n'' - n'' - x'$,

mit der Massgabe, dass die Gesamtanzahl von Si-gebundenen Wasserstoffatomen und Kohlenwasserstoffresten R und $R^7$ mit aliphatischer Mehrfachbindung je Molekül mindestens 3 und an ein Si-Atom höchstens ein Kohlenwasserstoffrest mit aliphatischer Mehrfachbindung gebunden ist.

Vorzugsweise hat hier $R^7$ die gleiche Bedeutung wie R oder ist eine Alkoxy- oder Hydroxylgruppe. Dann gilt:

$$p'' = 0 \text{ bis } m \cdot n'' - n'' - x' - 2.$$

Vorzugsweise liegen $n''$ und $p''$ jeweils im Bereich von $0{,}3\ (n''+p''+x'+2)$ bis $0{,}6\ (n''+p''+x'+2)$.

Vorzugsweise beträgt die gesamte Anzahl der Kohlenwasserstoffreste R und $R^2$ mit aliphatischer Mehrfachbindung je Molekül im Organopolysiloxan der Formel (III) höchstens

$$0{,}03\ (n''+p''+x'+2).$$

Vorzugsweise liegt $x'$ im Bereich von $0{,}04\ (n''+p''+x'+2)$ bis $0{,}1\ (n''+p''+x'+2)$.

Es kann eine Art von Organopolysiloxan der Formel (III) verwendet werden. Es kann aber auch ein Gemisch aus mindestens zwei verschiedenen Arten von Organopolysiloxan (III) verwendet werden.

Die Viskosität vom Organopolysiloxan der Formel (III) beträgt vorzugsweise $10^2$ bis $10^6$ mPa·s bei 25°C.

Die Herstellung von Organopolysiloxanen der Formel (III) kann z.B. durch Mischhydrolyse von Silanen der Formel $RR^1SiCl_2$ oder $RR^1Si(OCH_3)_2$, oder $RR^1Si(OC_2H_5)_2$, $R_2SiCl_2$ oder $R_2Si(OCH_3)_2$ oder $R_2Si(OC_2H_5)_2$, $SiRHCl_2$ oder $SiRH(OCH_3)_2$ oder $SiRH(OC_2H_5)_2$ und $R_3SiCl$ oder $R_3Si(OCH_3)$ in den gewünschten Mengen erfolgen. Durch Zugabe eines Elektrolyten, wie NaCl oder $Na_2SO_4$ können die so erhaltenen Organopolysiloxane leicht als konzentrierte wässrige Lösung abgeschieden und daraus durch Abdestillieren des Wassers isoliert werden, was aber keineswegs stets erforderlich ist.

Der Anteil des Wassers in den erfindungsgemäss verwendeten Lösungen beträgt vorzugsweise 40 bis 99 Gewichtsprozent, bezogen auf das Gesamtgewicht von Organopolysiloxan und Wasser.

Die bei der Vernetzung angewandten Temperaturen betragen vorzugsweise 70 bis 165°C.

Bei Raumtemperatur bleiben die erfindungsgemäss verwendeten wässrigen, katalysierten Lösungen, auch wenn sie keinen Inhibitor enthalten, etwa 48 Stunden unverändert. Dies ist überraschend, weil in DE-OS 24 55 483 empfohlen wird, aus Vinylendgruppen aufweisendem Diorganopolysiloxan und Platinkatalysator einerseits und Organopolysiloxan mit Si-gebundenem Wasserstoff andererseits zunächst zwei separate Emulsionen zu bereiten, die erst kurz vor der endgültigen Verwendung miteinander vereinigt werden.

Die erfindungsgemäss erhaltenen Überzüge sind transparent und gasdurchlässig sowie beständig gegenüber dem Angriff von Wasser.

In den folgenden Beispielen beziehen sich alle Angaben von Prozentsätzen und Teilen auf das Gewicht, soweit nichts anderes angegeben ist.

Beispiel 1

Zu einem Gemisch aus 1,8 Mol Dimethyldichlorsilan, 1 Mol [Acetoxy(hexaethylenoxy)propyl]-methyldichlorsilan, 0,15 Mol Methyldichlorsilan und 0,05 Mol Vinylmethyldichlorsilan werden unter Rühren 55 Mol Wasser tropfenweise Stunde wird die klare Lösung bis zur Neutralität mit wässrigem Ammoniak vermischt und schliesslich mit Natriumchlorid gesättigt. Die Lösung teilt sich in zwei Schichten. Die obere Schicht besteht aus einem wasserlöslichen Organopolysiloxan vom Typ der Formel (III) in etwa 50prozentiger wässriger Lösung.

Diese Lösung wird mit 40 Gewichts-ppm Platin in Form von $P+Cl_4$ vermischt und auf ein Papier mittels eines Meyer-Stabs aufgetragen. Das so überzogene Papier wird 5 Minuten auf 150°C erwärmt. Ein Wassertropfen auf diesem Papier zeigt anfangs einen Randwinkel von 63°, nach etwa 5 Minuten hat er sich gleichmässig auf dem Papier verteilt. Auf einem mit Dimethylpolysiloxan überzogenen Papier hat ein Wassertropfen einen Randwinkel von 101°.

Beispiel 2

a) Zu einem Gemisch aus 1,7 Mol Dimethyldichlorsilan, 1 Mol [Acetoxy(hexaethylenoxy)propyl]-methyldichlorsilan und 0,3 Mol Vinylmethyldichlorsilan werden unter Rühren 60 Mol Wasser tropfenweise gegeben. Nach einer Stunde wird die klare Lösung mit wässrigem Ammoniak neutralisiert und schliesslich mit Natriumchlorid gesättigt. Die Lösung teilt sich in zwei Schichten. Die obere Schicht besteht aus einem wasserlöslichen Organopolysiloxan vom Typ der Formel (I) in etwa 60prozentiger wässriger Lösung.

b) Zu einem Gemisch aus 1 Mol Dimethyldichlorsilan, 1 Mol [Acetoxy(hexaethylenoxy)propyl]-methyldichlorsilan und 1 Mol Methyldichlorsilan werden unter Rühren 12 Mol Methanol tropfenweise gegeben. Nach 15 Minuten werden zu dem so erhaltenen Gemisch unter Rühren 60 Mol Wasser gegeben. Nach einer Stunde weiteren Rührens wird mit wässrigem Ammoniak neutralisiert und schliesslich mit Natriumsulfat gesättigt. Die Lösung teilt sich in zwei Schichten. Die obere Schicht besteht aus einem wasserlöslichen Organopolysiloxan vom Typ der Formel (II) in etwa 55prozentiger wässriger Lösung.

c) Ein Gemisch aus gleichen Teilen der gemäss a) und b) erhaltenen oberen Schichten wird mit 40 Gewichts-ppm Platin in Form von Platintetrachlorid vermischt und auf ein Papier mittels eines Meyer-Stabs aufgetragen. Das so überzogene Papier wird 5 Minuten auf 150°C erwärmt. Ein Wassertropfen verteilt sich innerhalb kurzer Zeit auf dem so überzogenen Papier.

**Patentansprüche**

1. Verfahren zur Herstellung von Überzügen durch Auftragen von in wässrigem Medium befindlichem Organopolysiloxan auf die zu überziehende Unterlage und Vernetzen vom Organopolysiloxan durch Anlagerung von Si-gebundenen Wasserstoffatomen an SiC-gebundene Gruppen mit aliphatischer Mehrfachbindung, dadurch gekennzeichnet, dass als in wässrigem Medium befindliches Organopolysiloxan mit Si-gebundenem Wasserstoff und Sic-gebundenen Gruppen mit aliphatischer Mehrfachbindung ein solches verwendet wird, das durch einen Gehalt von mindestens einer daran gebundenen Oxyalkyleneinheit je Si-Atom wasserlöslich ist.

2. Verfahren nach Anspruch 1, dadurch gekennzeichnet, dass als Organopolysiloxan mit SiC-gebundenen Gruppen mit aliphatischer Mehrfachbindung solches der Formel

$$R^2_a R_{3-a} Si (OSiRR^1)_n (OSiR_2)_p OSiR_{3-b} R^2_b ,$$

verwendet wird, worin

R gleiche oder verschiedene einwertige Kohlenwasserstoffreste,
$R^1$ gleiche oder verschiedene Reste der Formel

$$-R_3 (OCHR^4CH_2)_m OY,$$

wobei $R_3$ gleiche oder verschiedene, von aliphatischer Mehrfachbindung freie, zweiwertige Kohlenwasserstoffreste mit jeweils 1 bis 4 Kohlenstoffatomen, $R^4$ Wasserstoff oder gleiche oder verschiedene, von aliphatischer Mehrfachbindung freie, zweiwertige Kohlenwasserstoffreste mit jeweils 1 bis 4 Kohlenstoffatomen, Y Wasserstoff oder gleiche oder verschiedene, von aliphatischer Mehrfachbindung freie Acylreste mit 1 bis 3 Kohlenstoffatomen je Rest bedeutet oder die gleiche Bedeutung wie $R^4$ hat und m eine Zahl von 2 bis 30 ist, bedeutet,
$R^2$ die gleiche Bedeutung wie R oder $R^1$ hat oder Hydroxylgruppen und/oder gleiche oder verschiedene Alkoxygruppen bedeuten, mit der Massgabe, dass an ein Si-Atom höchstens ein Kohlenwasserstoffrest mit aliphatischer Mehrfachbindung gebunden ist und insgesamt mindestens 2 der Reste R und $R^2$ je Molekül Kohlenwasserstoffreste mit aliphatischer Mehrfachbindung sind,

a 0 oder 1
b 0 oder 1
n mindestens 1 und
p 0 bis m·n–n ist.

3. Verfahren nach Anspruch 1 und 2, dadurch gekennzeichnet, dass als Organopolysiloxan mit Si-gebundenem Wasserstoff solches der Formel

$$R^6_a R^5_{3-a} Si(OSiR^5R^1)_{n'} (OSiR^5_2)_{p'} (OSiR^5H)_x OSiR_{3-b} R^6$$

verwendet wird, worin

R, $R^1$, a und b jeweils die oben dafür angegebene Bedeutung haben,
$R^5$ gleiche oder verschiedene, von aliphatischer Mehrfachbindung freie einwertige Kohlenwasserstoffreste bedeutet,
$R^6$ Wasserstoff, Alkoxy- und/oder Hydroxylgruppen bedeutet oder die gleiche Bedeutung wie $R^5$ hat,
n′ mindestens 1,
x mindestens 2 und
p′ 0 bis m·n′–n′–x ist.

4. Verfahren nach Anspruch 1, dadurch gekennzeichnet, dass als Organopolysiloxan solches verwendet wird, das in jedem Molekül sowohl SiC-gebundene Gruppen mit aliphatischer Mehrfachbindung als auch Si-gebundenen Wasserstoff enthält und der Formel

$$R^7_a R_{3-a} Si (OSiRR^1)_{n''} (OSiR^5H)_{x'} (OSiR_2)_{p''} OSiR_{3-a} R^7_a$$

entspricht, worin

R, $R^1$, $R^5$ und a jeweils die oben dafür angegebene Bedeutung haben,
$R^7$ die gleiche Bedeutung wie $R^2$ oder $R^6$ hat,
n″ mindestens 1
x′ mindestens 1 und
p″ 0 bis m·n″–n″–x′

ist, mit der Massgabe, dass die Gesamtanzahl von Si-gebundenen Wasserstoffatomen und Kohlenwasserstoffresten R und $R^7$ mit aliphatischer Mehrfachbindung je Molekül mindestens 3 und an ein Si-Atom höchstens ein Kohlenwasserstoffrest mit aliphatischer Mehrfachbindung gebunden ist.

**Claims**

1. Process for producing coatings by applying organopolysiloxane, which is in an aqueous medium, to the substrate that is to be coated and crosslinking the organopolysiloxane by adding Si-bonded hydrogen atoms onto SiC-bonded groups having an aliphatic multiple bond, characterised in that there is used as organopolysiloxane which has Si-bonded hydrogen and SiC-bonded groups having an aliphatic multiple bond and which is in an aqueous medium one which is water-soluble as a result of the fact that it contains at least one oxyalkylene unit, which is bonded to it, per Si atom.

2. Process according to claim 1, characterised in that there is used as organopolysiloxane which has SiC-bonded groups having an aliphatic multiple bond one of the formula

$$R^2_a R_{3-a} Si (OSiRR^1)_n (OSiR_2)_p OSiR_{3-b} R^2_b,$$

in which
R represents the same or different monovalent hydrocarbon radicals,
$R^1$ represents the same or different radicals of the formula

$$-R^3(OCHR^4CH_2)_mOY,$$

in which $R^3$ represents the same or different divalent hydrocarbon radicals having in each case from 1 to 4 carbon atoms and being free of aliphatic multiple bonds, $R^4$ represents hydrogen or the same or different divalent hydrocarbon radicals having in each case from 1 to 4 carbon atoms and being free of aliphatic multiple bonds, Y represents hydrogen or the same or different acyl radicals having from 1 to 3 carbon atoms per radical and being free of aliphatic multiple bonds, or has the same meaning as $R^4$, and m is a number from 2 to 30,
$R^2$ has the same meaning as R or $R^1$ or represents hydroxy groups and/or the same or different alkoxy groups, with the proviso that at most one hydrocarbon radical having an aliphatic multiple bond is bonded to an Si atom and a total of at least 2 of the radicals R and $R^2$ per molecule are hydrocarbon radicals having an aliphatic multiple bond,

a is 0 or 1,
b is 0 or 1
n is at least 1, and
p is from 0 to m·n–n.

3. Process according to claims 1 and 2, characterised in that there is used as organopolysiloxane having Si-bonded hydrogen one of the formula

$$R^6_aR^5_{3-a}Si(OSiR^5R^1)_{n'}(OSiR^5_2)_{p'}(OSiR^5H)_xOSiR_{3-b}R^6,$$

in which
R, $R^1$, a and b in each case have the meanings given above,
$R^5$ represents the same or different monovalent hydrocarbon radicals that are free of aliphatic multiple bonds,
$R^6$ represents hydrogen, alkoxy groups and/or hydroxy groups, or has the same meaning as $R^5$,
n′ is at least 1,
x is at least 2, and
p′ is from 0 to m·n′–n′–x.

4. Process according to claim 1, characterised in that there is used as organopolysiloxane one which contains in each molecule both SiC-bonded groups having an aliphatic multiple bond and Si-bonded hydrogen and which corresponds to the formula

$$R^7_aR_{3-a}Si(OSiRR^1)_{n''}(OSiR^5H)_{x'}(OSiR_2)_{p''}OSiR_{3-a}R^7_a,$$

in which R, $R^1$, $R^5$ and a in each case have the meanings given above,
$R^7$ has the same meaning as $R^2$ or $R^6$,
n″ is at least 1,
x′ is at least 1, and
p″ is from 0 to m·n″–n″–x′,

with the proviso that the total number of Si-bonded hydrogen atoms and hydrocarbon radicals R and $R^7$ having an aliphatic multiple bond is at least 3 per molecule and that at most one hydrocarbon radical having an aliphatic multiple bond is bonded to an Si-atom.

## Revendications

1. Procédé de formation de revêtements par application sur le substrat à recouvrir d'un polyorganosiloxane en milieu aqueux, et réticulation du polyorganosiloxane par addition d'atomes d'hydrogène liés à du silicium à des groupes à liaisons SiC et à liaison multiple aliphatique, procédé caractérisé en ce que l'on utilise, comme polyorganosiloxane en milieu aqueux avec de l'hydrogène lié à du silicium et des groupes à liaisons SiC à liaison multiple aliphatique, un polyorganosiloxane qui est rendu soluble dans l'eau par une teneur d'au moins un motif oxyalkylène lié par atome de silicium.

2. Procédé selon la revendication 1 caractérisé en ce que l'on emploie, comme polyorganosiloxane avec des groupes à liaisons SiC et une liaison multiple aliphatique, un composé de formule

$$R^2_aR_{3-a}Si(OSiRR^1)_n(OSiR_2)_pOSiR_{3-b}R^2_b$$

dans laquelle
R représente des radicaux hydrocarbonés monovalents identiques ou différents
$R^1$ des radicaux identiques ou différents de formule

$$-R^3(OCHR^4CH_2)_mOY,$$

$R^3$ désignant des radicaux hydrocarbonés divalents en $C_1$ à $C_4$ sans liaisons multiples aliphatiques, identiques ou différents, $R^4$ l'hydrogène ou des radicaux hydrocarbonés divalents en $C_1$ à $C_4$ sans liaisons multiples aliphatiques, identiques ou différents, Y l'hydrogène ou des radicaux acyles en $C_1$ à $C_3$ sans liaisons multiples aliphatiques, identiques ou différents, ou encore ayant la même signification que $R^4$, et m étant un nombre de 2 à 30,
$R^2$ représente des groupes hydroxyliques et/ou des groupe alcoxy identiques ou différents et pouvant encore avoir la même signification que R ou $R^1$, avec les conditions qu'il y ait au plus un radical hydrocarboné à liaison multiple aliphatique lié à un atome de silicium, et qu'au total au moins deux des radicaux $R^1$ et $R^2$ par molécule soient des radicaux hydrocarbonés avec une liaison multiple aliphatique,

a est le nombre 0 ou 1
b est le nombre 0 ou 1

n est au moins égal à 1 et
p est un nombre de 0 à m • n–n.

3. Procédé selon la revendication 1 et 2, caractérisé en ce que l'on emploie, comme polyorganosiloxane avec de l'hydrogène lié à du silicium, un composé de formule

$R^6_a R^5_{3-a}Si(OSiR^5R^1)_{n'}(OSiR^5_2)_{p'}(OSiR^5H)_xOSiR_{3-b}R^6$

dans laquelle R, $R^1$, a et b ont les mêmes significations que dans la revendication 2,
$R^5$ représente des radicaux hydrocarbonés monovalents sans liaison multiple aliphatique, identiques ou différents,
$R^6$ représente l'hydrogène, des groupes alcoxy et/ou hydroxy, ou bien a la même signification que $R^5$,
n' est un nombre au moins égal à 1,
x un nombre au moins égal à 2, et
p' un nombre de 0 à m • n'–n'–x.

4. Procédé selon la revendication 1 caractérisé en ce que l'on emploie un polyorganosiloxane dont chaque molécule comporte à la fois des groupes à liaisons SiC avec une liaison multiple aliphatique, et de l'hydrogène lié à du silicium, de formule

$R^7_a R_{3-a}Si(OSiRR^1)_{n''}(OSiR^5H)_{x'}(OSiR_2)_{p''}OSiR_{3-a}R^7_a$

dans laquelle R, $R^1$, $R^5$ et a ont les significations données aux revendications 2 et 3,
$R^7$ a la même signification que $R^2$ ou $R^6$,
n'' est un nombre au moins égal à 1,
x' un nombre au moins égal à 1, et
p'' un nombre de 0 à m • n''–n''–x',

avec les conditions que le nombre total d'atomes d'hydrogène liés à du silicium et des radicaux hydrocarbonés R et $R^7$ à liaison multiple aliphatique soient au moins de 3 par molécule, et qu'à un atome de silicium soit lié au plus un radical hydrocarboné avec une liaison multiple aliphatique.